# EUROPÄISCHE PATENTANMELDUNG

(11) **EP 0 657 756 A1**
(43) Veröffentlichungstag der Anmeldung: **14.06.1995**
(21) Anmeldenummer: 94117887.3
(22) Anmeldetag: 12.11.1994
(51) Int. Cl.: G02B 6/44

(54) **Muffengehäuse zum Verbinden, Abzweigen und Aufteilen von Kabeln, insbesondere der Bündeladern und ihrer Glasfasern von Glasfaserkabeln**

(30) Priorität: 09.12.1993 DE 4342000
(71) Anmelder: STEWING KUNSTSTOFFBETRIEB GmbH, D-46282 Dorsten (DE)
(72) Erfinder: Dehling, Helmut, Dipl.-Ing., D-46286 Dorsten (DE)
(74) Vertreter: Honke, Manfred, Dr.-Ing.

(57) **Zusammenfassung**

Es handelt sich um ein Muffengehäuse zum Verbinden, Abzweigen und Aufteilen von Glasfaserkabeln. Dieses Muffengehäuse weist einen geteilten Dichtkörper mit mehreren Kabeldurchführungsadaptern, eine Konsole für einen Kassettenhalter und einen solchen Kassettenhalter auf. Auf den Dichtkörper ist eine Muffenhaube mit Dichtwirkung aufsetzbar, welche mittels einen den Dichtkörper umlaufenden Dichtringes gegen den Dichtkörper abgedichtet ist und den Kassettenhalter, die Konsole und zumindest teilweise den Dichtkörper aufnimmt.

## Beschreibung

Die Erfindung betrifft ein Muffengehäuse zum Verbinden, Abzweigen und Aufteilen von Kabeln, insbesondere der Bündeladern und ihrer Glasfasern von Glasfaserkabeln.

Zum Verbinden und Abzweigen von Glasfaserkabeln in insbesondere der Kommunikationstechnik verwendet man Kassetten. Die Glasfaserkabel weisen regelmäßig mehrere Bündeladern auf. Die Bündeladern weisen regelmäßig mehrere Glasfasern auf. Die Verbindungsstellen und Abzweigstellen der Glasfasern befinden sich in den Kassetten. Folglich müssen die Bündeladern der Glasfaserkabel in die Kassetten eingeführt bzw. herausgeführt werden. Zum Herstellen der Verbindungsstellen und Abzweigstellen werden die Glasfasern freigelegt. Die Unterbringung der Kassetten erfolgt im allgemeinen in Muffengehäusen aus einem Gehäusetopf und einem auf den Gehäusetopf aufsetzbaren Gehäusedeckel. Solche Muffengehäuse können mehrere übereinander gestapelte Kassetten und folglich Wickellagen der Bündeladern aufnehmen. Problematisch ist dagegen das Ein- und Ausführen der Glasfaserkabel.

Der Erfindung liegt die Aufgabe zugrunde, ein Muffengehäuse der eingangs beschriebenen Ausführungsform zu schaffen, welches an geschnittenen und ungeschnittenen Glasfaserkabeln als Verbindungs-, Abzweig- oder Aufteilmuffen sowie für Glasfaseranschneidetechnik eingesetzt werden kann und sich durch einfache Handhabung und hohe Lebensdauer auszeichnet.

Zur Lösung dieser Aufgabe ist das gattungsgemäße Muffengehäuse gekennzeichnet durch einen geteilten Dichtkörper als Gehäuseboden mit einem oder mehreren Kabeldurchführungsadaptern, durch zumindest eine an den Dichtkörper zu befestigende Konsole für zumindest einen an der Konsole zu befestigenden Kassettenhalter für eine Mehrzahl von Kassetten und durch eine auf den Dichtkörper mit Dichtwirkung aufsetzbare Muffenhaube, welche mittels zumindest eines den Dichtkörper in einer Ringnut umlaufenden Dichtringes gegen den Dichtkörper abgedichtet ist und den Kassettenhalter, die Konsole und zumindest teilweise den Dichtkörper aufnimmt. - Nach Lehre der Erfindung wird ein Muffengehäuse für einseitige Kabeleinführung verwirklicht, das für Mehrfachbelegung geeignet ist und an geschnittenen und ungeschnittenen Glasfaserkabeln in nicht Druckluft überwachten Netzen als Verbindungs-, Abzweig- oder Aufteilmuffe eingesetzt werden kann.

Weitere erfindungswesentliche Merkmale sind im folgenden aufgeführt. So lehrt die Erfindung, daß der Dichtkörper als mittig geteilter Dichtkörper für zwei nebeneinander angeordnete Kabeldurchführungsadapter ausgebildet ist und eine eingeformte Dichtkammer zur Aufnahme von zu injizierender Dichtmasse aufweist, und daß die beiden Dichtkörperhälften mittels Schrauben, z. B. unverlierbar gehaltener Schrauben miteinander verbindbar sind. Dadurch wird die Montage der Kabeldurchführungsadapter erheblich erleichtert. Denn vorzugsweise weist der Dichtkörper Aufnahmen für jeweils zwei nebeneinander und mit vorgegebenem Abstand hintereinander angeordnete Kabeldurchführungsadapter aus biegeelastischem Material, z. B. Gummi oder gummiartigem Kunststoff auf, wobei sich die Dichtkammer zwischen den hintereinander angeordneten Kabeldurchführungsadaptern befindet. Zweckmäßigerweise weisen die Aufnahmen, z. B. kreisförmige Aufnahmen für kreisförmige Kabeldurchführungsadapter, gezahnte oder geriffelte Innenflächen zur zug- und schubfesten Verankerung der Kabeldurchführungsadapter auf. Um eine einwandfreie Abdichtung im Teilungsbereich der beiden Dichtkörper zu erreichen, lehrt die Erfindung, daß der Dichtkörper in seinen beiden äußeren sich gegenüberliegenden Teilungsbereichen zu den hintereinander angeordneten Kabeldurchführungsadaptern führende Nut/Federverbindungen aufweist, daß die Nut/Federverbindungen im Bereich der Ringnut unterbrochen sind, daß die Ringnut an die Dichtkammer angeschlossen ist und der Dichtring mit Dichtmasse in Kontakt kommt. Tatsächlich bilden die Nut/Federausbildungen eine Barriere und verhindern, daß Dichtmasse von der Dichtkammer aus nach außen gedrückt wird bzw. unter Druck entweichen kann. Diese Barriere fehlt im Bereich der Ringnut für den Dichtring, so daß dort Dichtmasse mit dem Dichtring in Berührung kommt und auf diese Weise die Kreuzfuge abdichtet. Die Dichtkammer weist zumindest eine verschließbare Injektionsöffnung für die Dichtmasse und zumindest eine vorzugsweise gegenüberliegende Entlüftungsöffnung zum Entlüften der Dichtkammer auf. Ferner kann der Dichtring als ungeteilter Profildichtring ausgebildet sein. Außerdem weist der Dichtkörper zweckmäßigerweise ein Be- und Entlüftungsventil zum Be- und Entlüften der Haubenmuffe auf. Dadurch wird das Lösen der Haubenmuffe vom Dichtkörper leicht möglich. Hierzu muß lediglich der Schlauch an einer Handluftpumpe an das Be- und Entlüftungsventil angeschlossen und die Luftpumpe einige Male betätigt werden. Der dadurch erzeugte Innendruck läßt dann die Haubenmuffe sanft von dem Dichtkörper abgleiten.

Nach einem Vorschlag der Erfindung, dem selbständige Bedeutung zukommt, ist vorgesehen, daß in die Kabeldurchführungsadapter die Kabeldurchführungen unter Bildung jeweils eines von einer dünnen Haut gebildeten Kerns eingeschnitten sind. Bei Nichtbelegung einer Kabeldurchführung wird somit kein zusätzlicher Blindstopfen benötigt. Soll die betreffende Kabeldurchführung belegt werden, kann der betreffende Kern nach Aufschneiden der Haut unschwer entnommen werden. Zweckmäßigerweise weisen die Kabeldurchführungen Kabeleinführungsschnitte auf, so daß sich die Kabeldurchführungsadapter auf das jeweilige Kabel aufdrücken lassen. - Die Konsole kann als I-förmiges Flanschprofil ausgebildet sein, dessen einer I-Flansch an die Innenseite einer Dichtkörperhälfte angeschraubt ist und an dessen anderen I-Flansch der Kassettenhalter angeschlossen ist. Der I-Steg der Konsole kann Gewindebohrungen für Erdungsanschlüsse aufweisen. Zweckmäßigerweise besitzt die Konsole Aufnahmebohrungen und Einhängeanformungen zum Befestigen des Kassettenhalters. Außerdem kann die Konsole eine sich in Längsrichtung der Muffenhaube erstreckende Trägerschiene mit einem weiteren Flansch zum Anschließen eines weiteren Kassenttenhalters aufweisen, so daß beispielsweise zwei Kassettenhalter hintereinander in der Muffenhaube angeordnet sind. Die Trägerschiene kann aber auch unabhängig von der Konsole an eine der beiden Dichtkörperhälften anschraubbar sein. - Der Kassettenhalter besteht vorzugsweise aus biegeelastischem Material und weist Aufnahmefächer für die Kassetten auf, wobei die Aufnahmefächer durch in Abständen der Kassettendicken angeordnete Federlaschen gebildet sind. Die Federlaschen können im Bereich der Kassettenmitte Nocken aufweisen, welche in eine mittige Bohrung der Kassetten einrasten und die Kassetten zentrieren. Vorzugsweise weist der Kassettenhalter ein topfartiges Haltergehäuse mit bodenseitigen Spreizzapfen zum Einrasten in die Aufnahmebohrungen der Konsole auf. Außerdem kann das Haltergehäuse bodenseitig Gewindebuchsen zur Aufnahme von durch die Aufnahmebohrungen hindurchgeführten Befestigungsschrauben und/oder Einhängehaken zum Hintergreifen der Einhängeanformungen an der Konsole besitzen. Die Schraub- und Hakenbefestigung wird bevorzugt, wenn die Trägerschiene eingesetzt wird und zwei Kassettenhalter hintereinander befestigt werden. Außerdem empfiehlt die Erfindung, daß an die Unterseite des Kassettenhalters eine U-förmige Bündeladerablage mit ihrer U-Basis anschließbar ist, daß die Bündeladerablage nach innen abgewinkelte U-Schenkel aufweist und die abgewinkelten U-Schenkel eine Einlegeöffnung für Bündeladern begrenzen. Eine solche Bündeladernablage wird regelmäßig bei Einsatz des erfindungsgemäßen Muffengehäuses am ungeschnittenen Kabel benötigt, d. h., die Glasfaserkabel werden im Muffenbereich nicht gänzlich geschnitten, sondern nur abgemantelt. Die dann freien Bündeladern liegen als Schlaufe in der Muffenhaube. Nur die zu spleißenden Glasfasern werden geschnitten und in den Kassetten im Kassettenhalter verbunden. Die übrigen Bündeladern liegen geordnet und gehalten in der Bündeladernablage. Die Bündeladernschlaufe kann von unten in die Bündeladernablage eingeführt werden. Die Rückstellkraft aus der Schlaufenbiegung drückt die einzelnen Bündeladern an den linken und rechten Rand der gleichsam C-förmig abgewinkelten U-Schenkel. Vorzugsweise weist der Kassettenhalter auf seiner Unterseite angeformte Einschiebeköpfe und Einschiebezungen auf, wobei die U-Basis der Bündeladernablage entsprechende Einschiebelanglöcher mit von den Einschiebeköpfen untergriffenen Verengungen und Einschiebeaufnahmen für die Einschiebezungen besitzt. Dadurch läßt sich die Bündeladernablage werkzeuglos am Kassettenhalter befestigen. Weiter sieht die Erfindung vor, daß außenwandig an das Haltergehäuse ein elatisches Sicherungsband zum Überspannen der Kassetten mittels einer Mehrfachlochung anschließbar bzw. einhakbar ist und zur Lagefixierung in den Kassettenhalter eingeschobener Kassetten dient.

Nach einem weiteren Vorschlag der Erfindung ist vorgesehen, daß die Muffenhaube als langgestreckte Haube ausgebildet und die Haubenlänge so gewählt ist, daß die Bündeladern mit vorgegebenen Radien geführt sind und hinreichender Bündelvorrat zum einzelnen Herausnehmen und wieder Zurückführen von Kassetten aus dem Kassettenhalter vorhanden ist. Die Konsole für den Kassettenhalter sowie der Kassettenhalter selbst sind in der Muffenhaube so plaziert, daß die Bündeladern ungehindert vorbeigeführt werden können. - Zweckmäßigerweise weist die Muffenhaube einen Ringflansch mit über den Flanschumfang verteilten Durchbrechungen und der Dichtkörper einen Kragen mit über den Kragenumfang verteilten Durchbrechungen für eine Verschlußsicherung mittels Kabelbinder an beliebiger Umfangsstelle bei mit dem Ringflansch auf den Kragen aufgesetzter Muffenhaube auf, so daß eine optische Kontrolle gegen unbefugtes Öffnen des Muffengehäuses besteht. Im Rahmen der Erfindung kann der Dichtkörper oberhalb seines Kragens in vorgegebenen Abständen und gegebenenfalls versetzt angeordnete Einkerbungen zum Abhebeln der Muffenhaube mittels eines Werkzeuges, z. B. eines Schraubendrehers aufweisen. Insoweit handelt es sich um eine alternative Möglichkeit, die Muffenhaube ohne Verwendung einer Luftpumpe abzunehmen und das Muffengehäuse zu öffnen.

Der Dichtkörper und die Haubenmuffe bestehen zweckmäßigerweise aus PP (Polypropylen), die Kabeldurchführungsadapter aus EPDM (Ethylen-Propylen-Elastomere), die Konsole für den Kassettenhalter aus Stahl und der Kassettenhalter aus POM (Polyformaldehyd), wobei sämtliche verwendeten Materialien in bezug auf Toxikologie und Ökologie als unbedenklich und ungefährlich einzustufen sind. Die Kunststoffteile sind voll recycelbar.

Im folgenden wird die Erfindung anhand einer lediglich ein Ausführungsbeispiel darstellenden Zeichnung näher erläutert. Es zeigen:

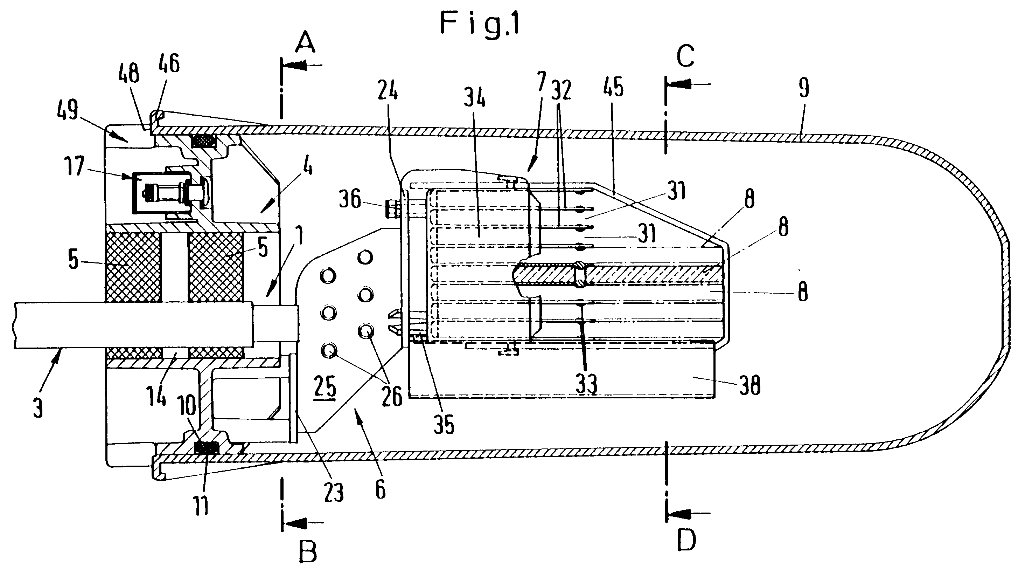

- **Fig. 1**: ein erfindungsgemäßes Muffengehäuse im Längsschnitt,

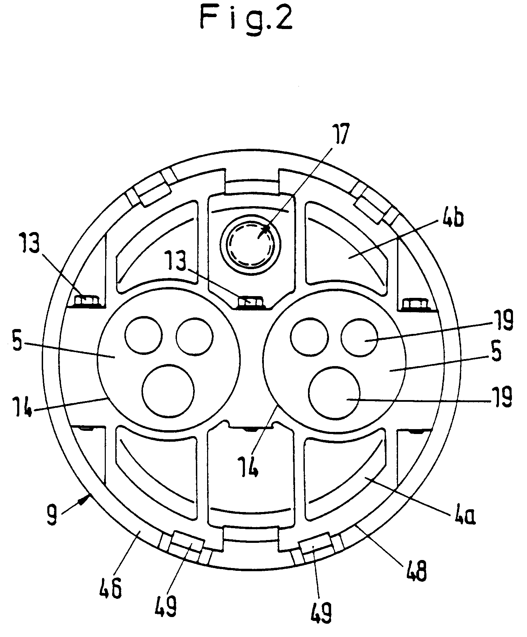

- **Fig. 2**: eine bodenseitige Ansicht des Gegenstandes nach Fig. 1,

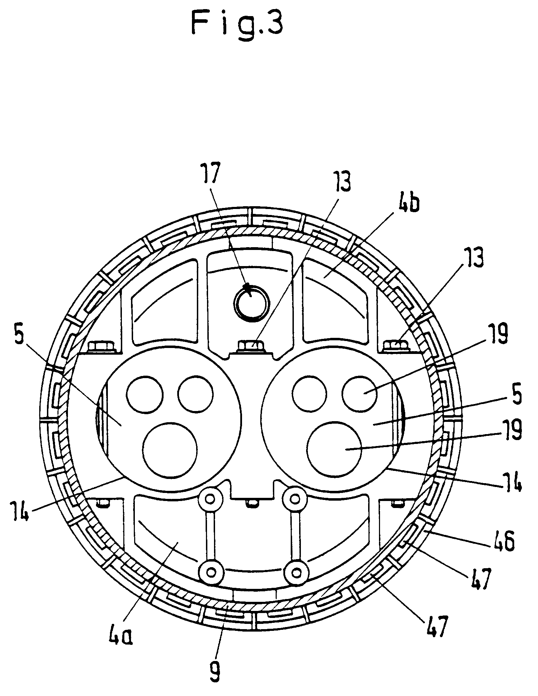

- **Fig. 3**: einen Schnitt A-B durch den Gegenstand nach Fig. 1,

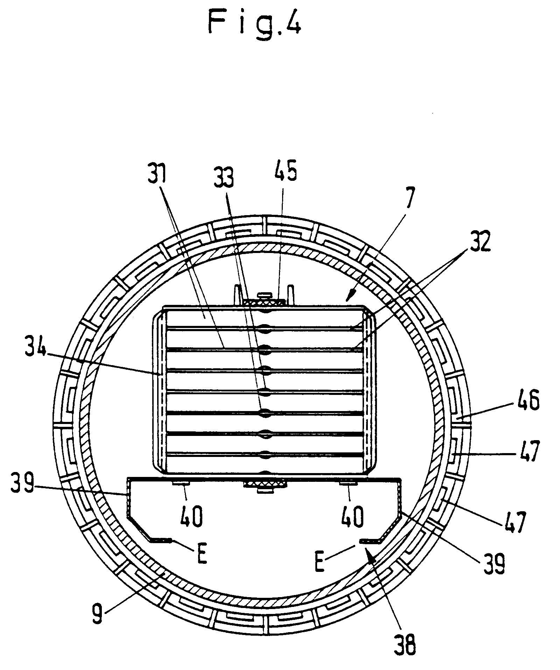

- **Fig. 4**: einen Schnitt C-D durch den Gegenstand nach Fig. 1,

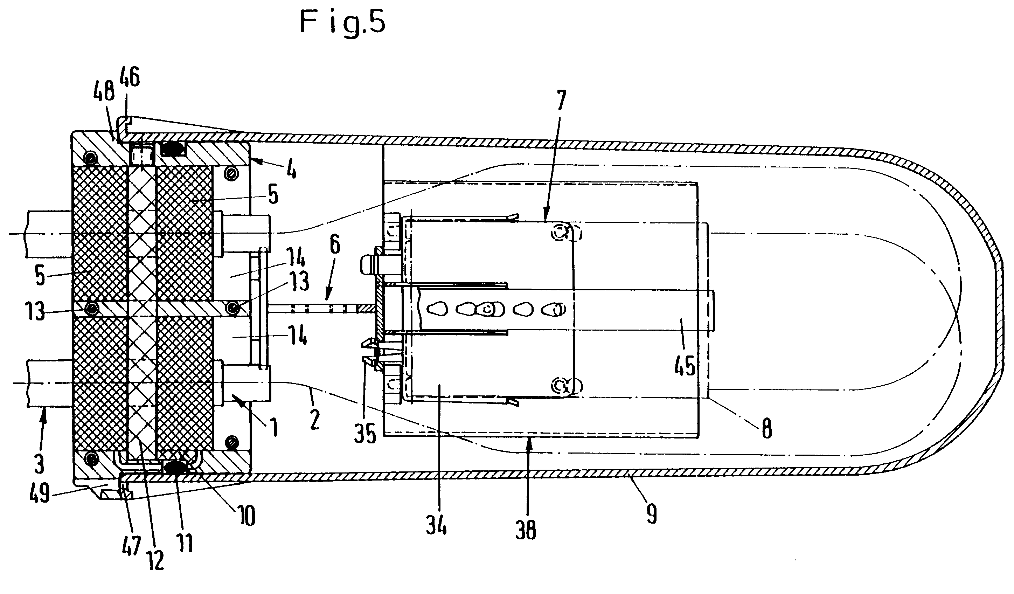

- **Fig. 5**: den Gegenstand nach Fig. 1 in einem verdrehten Längsschnitt,

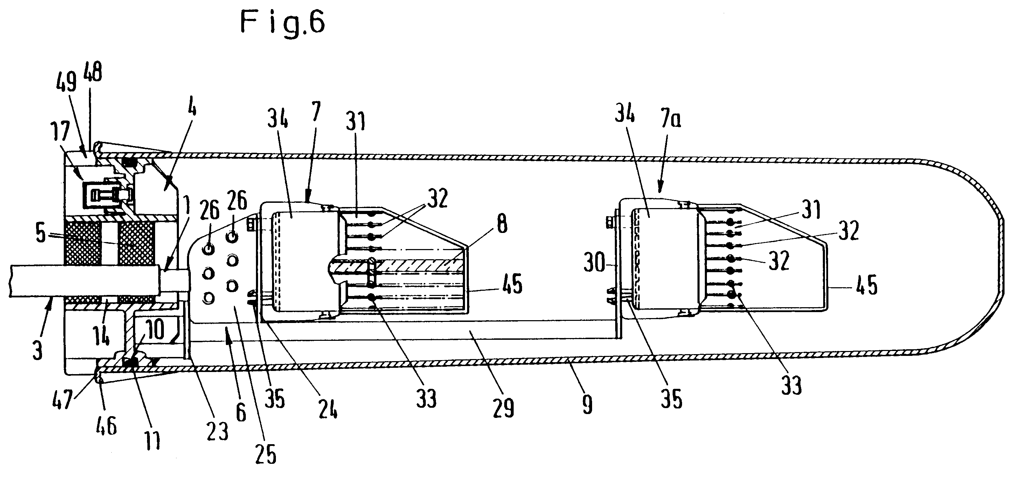

- **Fig. 6**: den Gegenstand nach Fig. 1 in schematischer Darstellung mit zwei hintereinander angeordneten Kassettenhaltern bzw. Kassetten,

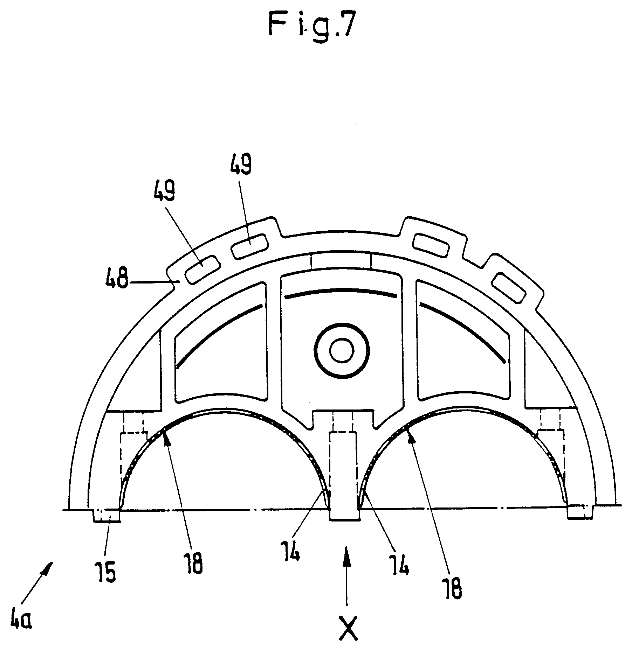

- **Fig. 7**: die Oberhälfte des Dichtkörpers in Stirnansicht,

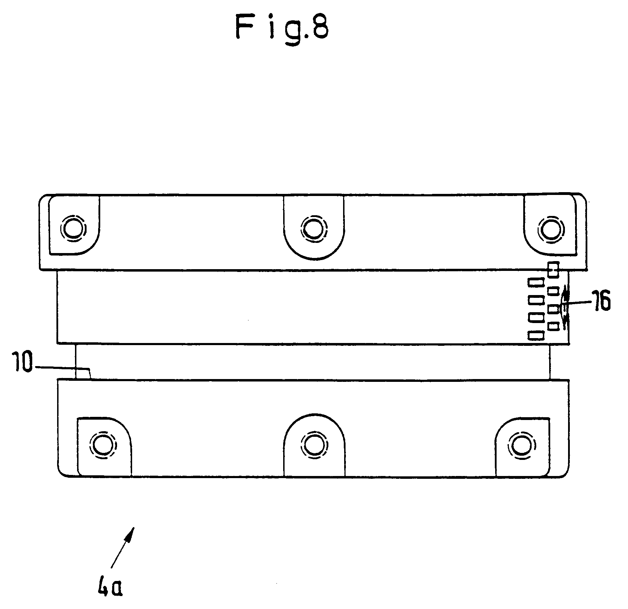

- **Fig. 8**: den Gegenstand nach Fig. 7 in Draufsicht,

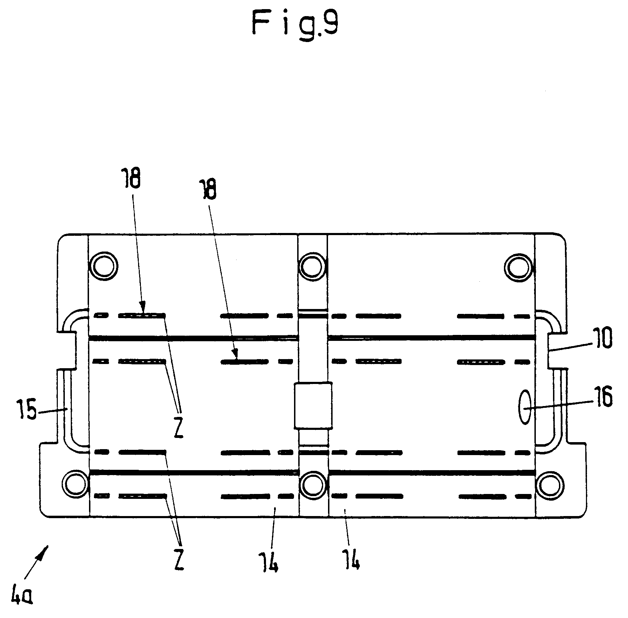

- **Fig. 9**: den Gegenstand nach Fig. 7 in Ansicht X,

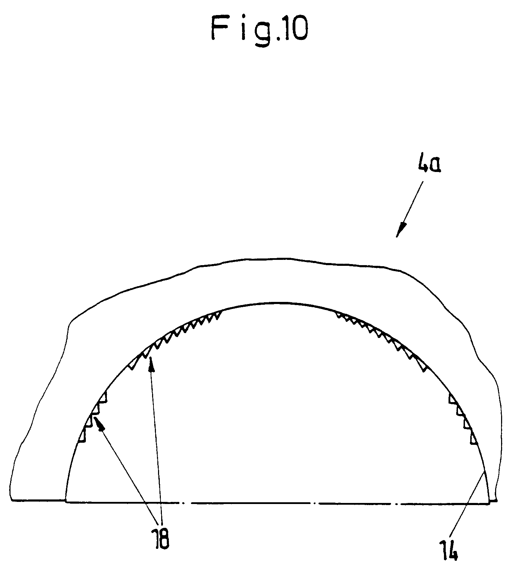

- **Fig. 10**: eine Einzelheit Z auf dem Gegenstand nach Fig. 9,

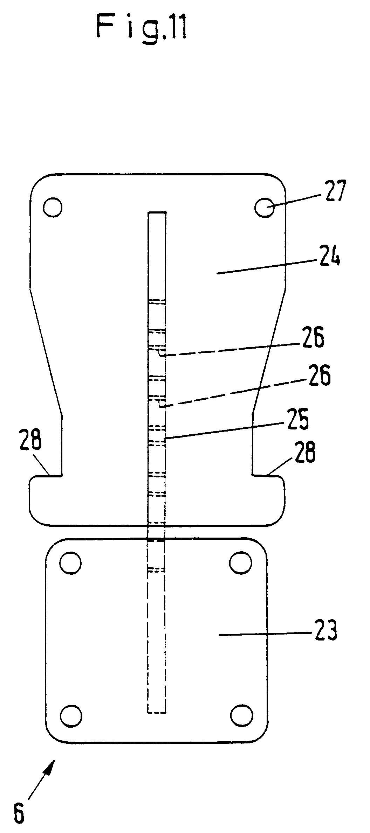

- **Fig. 11**: die Konsole für den Kassettenhalter in Rückansicht aus Kabeleinführungsrichtung,

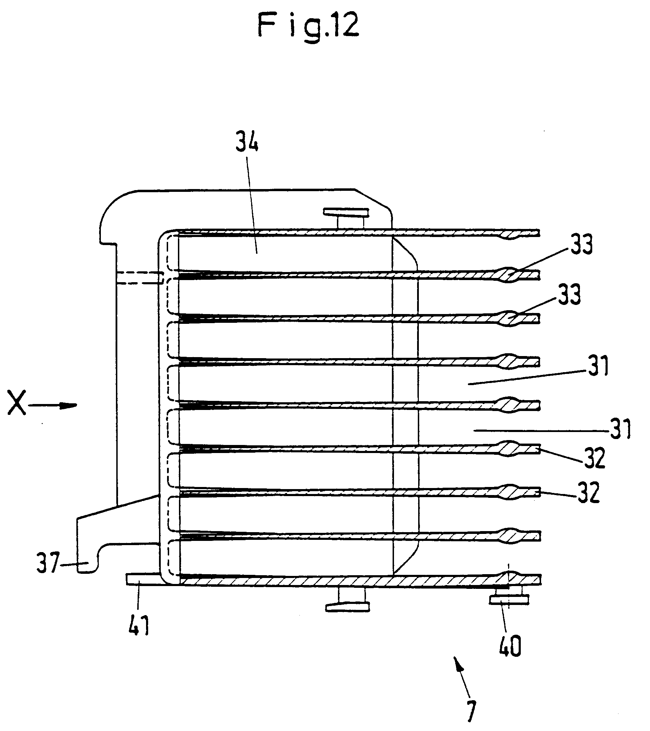

- **Fig. 12**: eine abgewandelte Ausführungsform des Kassettenhalters mit Gewindebuchsen und Einhängehaken in Seitenansicht,

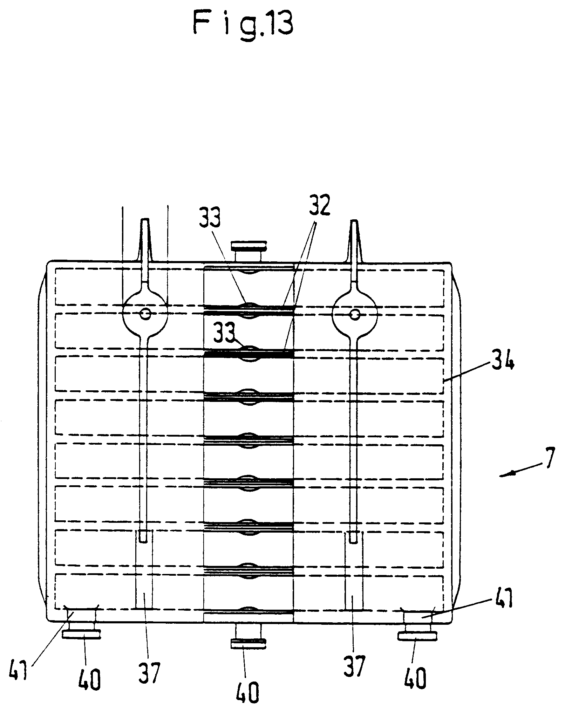

- **Fig. 13**: den Gegenstand nach Fig. 12 in Ansicht X,

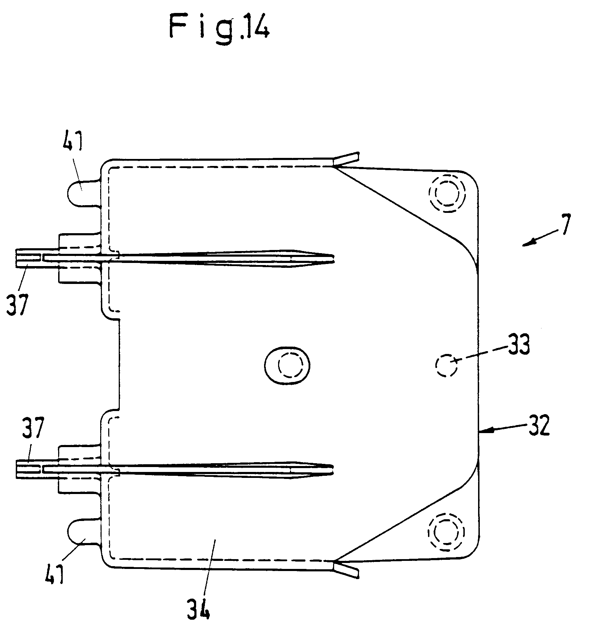

- **Fig. 14**: eine Draufsicht auf den Gegenstand nach Fig. 12,

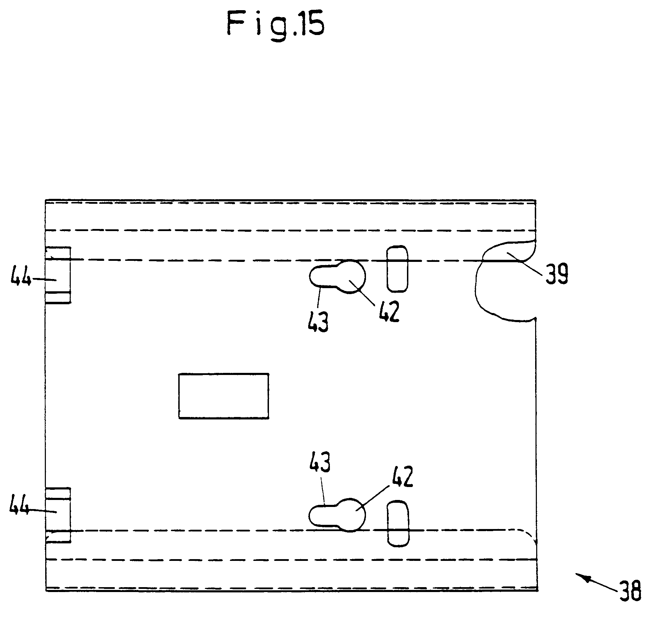

- **Fig. 15**: eine Bündeladernablage für den Gegenstand nach Fig. 12 in Draufsicht,

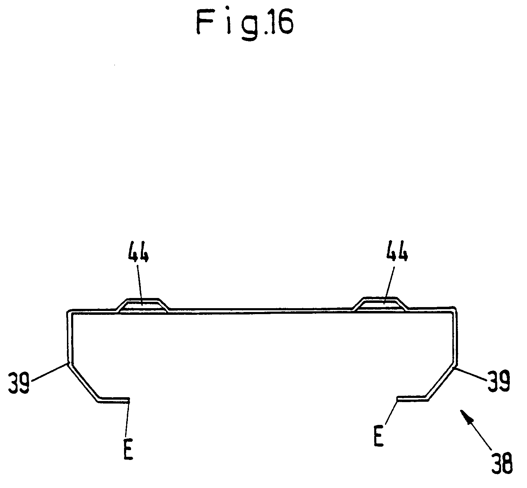

- **Fig. 16**: eine Stirnansicht auf den Gegenstand nach Fig. 15,

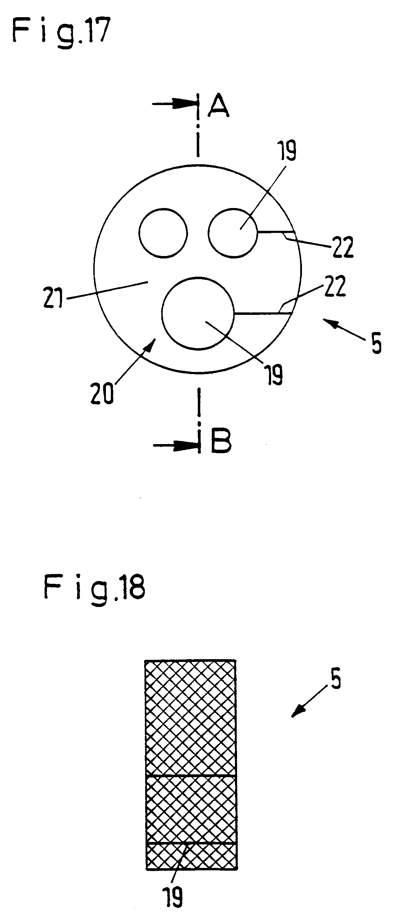

- **Fig. 17**: einen Kabeldurchführungsadapter für den Gegenstand nach Fig. 1 in Frontansicht,

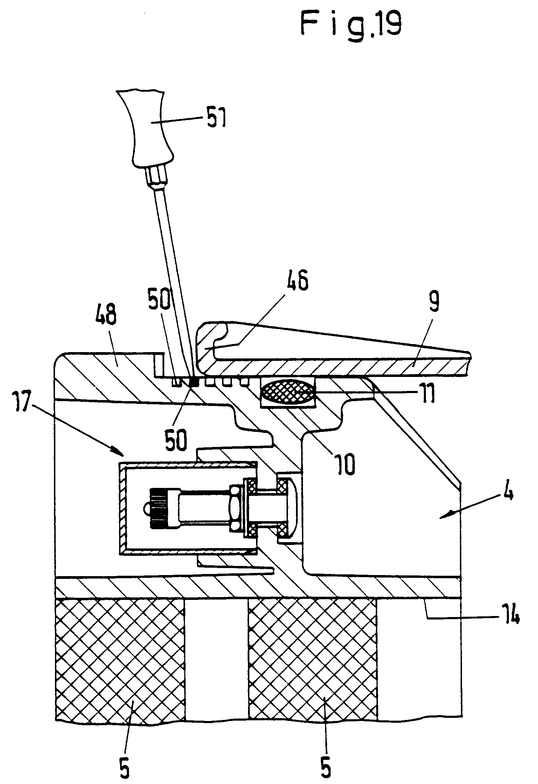

- **Fig. 18**: einen Schnitt A-B durch den Gegenstand nach Fig. 17 und
- **Fig. 19**: ausschnittsweise den Dichtkörper beim Abhebeln der Muffenhaube.

In den Figuren ist ein Muffengehäuse zum Verbinden, Abzweigen und Aufteilen von Kabeln, insbesondere der Bündeladern 1 und ihrer Glasfasern 2 von Glasfaserkabeln 3 dargestellt. Dieses Muffengehäuse weist einen geteilten Dichtkörper 4 als Gehäuseboden mit mehreren Kabeldurchführungsadaptern 5 auf, ferner eine an dem Dichtkörper 4 zu befestigende Konsole 6 für einen an der Konsole 6 zu befestigenden Kassettenhalter 7 für eine Mehrzahl von Kassetten 8 und eine auf den Dichtkörper 4 mit Dichtwirkung aufsetzbare Muffenhaube 9. Die Muffenhaube 9 ist mittels zumindest eines den Dichtkörper 4 in einer Ringnut 10 umlaufenden Dichtringes 11 gegen den Dichtkörper 4 abgedichtet und nimmt den Kassettenhalter 7, die Konsole 6 und teilweise den Dichtkörper 4 auf. Der Dichtkörper 4 ist als mittig geteilter Dichtkörper für zwei nebeneinander angeordnete Kabeldurchführungsadapter 5 ausgebildet und weist eine eingeformte Dichtkammer 12 zur Aufnahme von zu injizierender Dichtmasse auf. Die beiden Dichtkörperhälften 4a, 4b sind mittels Schrauben 13, z. B. montierbar gehaltener Schrauben miteinander verbindbar. Der Dichtkörper 4 weist Aufnahmen 14 für jeweils zwei nebeneinander und mit vorgegebenem Abstand hintereinander angeordnete Kabeldurchführungsadapter 5 aus biegeelastischem Material, z. B. gummiartigem Kunststoff auf. Die Dichtkammer 12 befindet sich zwischen den hintereinander angeordneten Kabeldurchführungsadaptern 5. Der Dichtkörper 4 besitzt in seinen beiden äußeren sich gegenüberliegenden Teilungsbereichen zu den hintereinander angeordneten Kabeldurchführungsadaptern 5 führende Nut/Federverbindungen 15, welche im Bereich der Ringnut 10 unterbrochen sind. Die Ringnut 10 ist an die Dichtkammer 12 angeschlossen, so daß der Dichtring 11 mit Dichtmasse in Kontakt kommt. Die Dichtkammer 12 weist zumindest eine verschließbare Injektionsöffnung 16 für die Dichtmasse und eine nicht gezeigte Entlüftungsöffnung für die Dichtkammer 12 auf. Der Dichtring 11 ist als ungeteilter Profildichtring ausgebildet. Der Dichtkörper 4 weist ein Be- und Entlüftungsventil 17 zum Be- und Entlüften der Muffenhaube 9 auf.

Die Aufnahmen 14 für die Kabeldurchführungsadapter 5 sind als kreisförmige Aufnahmen ausgebildet und weisen gezahnte Innenflächen 18 zur zug- und schubfesten Verankerung der Kabeldurchführungsadapter 5 auf. In die Kabeldurchführungsadapter 5 sind die Kabeldurchführungen 19 unter Bildung eines von einer dünnen Haut 20 gebildeten Kerns 21 eingeschnitten. Außerdem weisen die Kabeldurchführungen 19 Kabeleinführungsschnitte 22 für die Glasfaserkabel 3 auf. - Die Konsole 6 ist als I-förmiges Flanschprofil ausgebildet, dessen einer I-Flansch 23 an die Innenseite einer Dichtkörperhälfte 4a angeschraubt ist und an dessen anderen I-Flansch 24 der Kassettenhalter 7 angeschlossen ist. Der I-Steg 25 der Konsole 6 weist Gewindebohrungen 26 für Erdungsanschlüsse auf. Außerdem besitzt die Konsole 6 Aufnahmebohrungen 27 und Einhängeanformungen 28 zum Befestigen des Kassettenhalters 7. Für den Fall, daß in der Muffenhaube 9 zwei Kassettenhalter 7 bzw. Kassetten 8 hintereinander angeordnet werden sollen, kann die Konsole 6 eine sich in Längsrichtung der Muffenhaube 9 erstreckende Trägerschiene 29 mit einem weiteren Flansch 30 zum Anschließen eines weiteren Kassettenhalters 7a aufweisen. Der Kassettenhalter 7 besitzt Aufnahmefächer 31 für die Kassetten 8, wobei die Aufnahmefächer 31 durch in Abständen der Kassettendicken angeordnete Federlaschen 32 ausgebildet sind. Die Federlaschen 32 weisen im Bereich der Kassettenmitte Nocken 33 auf, welche in eine mittige Bohrung der Kassetten 8 einrasten, so daß die Kassetten 8 unschwer einzeln in den Kassettenhalter 7 eingeschoben oder herausgenommen werden können. Im übrigen wird durch die Nocken 33 eine Zentrierung der Kassetten 8 in dem Kassettenhalter 7 erreicht. Der Kassettenhalter 7 weist ein topfartiges Haltergehäuse 34 mit bodenseitigen Spreizzapfen 35 zum Einrasten in die Aufnahmebohrungen 27 der Konsole 6 und/oder Gewindebuchsen 36 zur Aufnahme von durch die Aufnahmebohrungen 27 hindurchgeführten Befestigungsschrauben und/oder Einhängehaken 37 zum Hintergreifen der Einhängeanformungen 28 an der Konsole 6 auf. - An die Unterseite des Kassettenhalters 7 ist eine U-förmige Bündeladernablage 38 mit Ihrer U-Basis anschließbar. Die Bündeladernablage 38 weist nach innen abgewinkelte U-Schenkel 39 auf, welche eine Einlegeöffnung E begrenzen. Ferner weist der Kassettenhalter 7 auf seiner Unterseite angeformte Einschiebeköpfe 40 und Einschiebezungen 41 auf, während die U-Basis der Bündeladernablage 38 entsprechende Einschiebelanglöcher 42 mit von den Einschiebeköpfen 40 hintergriffenen Verengungen 43 und Einschiebeaufnahmen 44 für die Einschiebezungen 41 aufweist. Außenwandig ist an das Haltergehäuse 34 ein elastisches Sicherungsband 45 zum Überspannen der Kassetten 8 mittels einer Mehrfachlochung anschließbar bzw. einhakbar, so daß eine zusätzliche sichere Fixierung der Kassetten 8 erreicht wird.

Die Muffenhaube 9 ist als langgestreckte Haube ausgebildet. Die Haubenlänge ist so gewählt, daß die Bündeladern 1 mit vorgegebenen bzw. vorgeschriebenen Radien geführt werden können und ausreichender Bündelvorrat zum einzelnen Herausnehmen und wieder Zurückführen von Kassetten 8 aus dem Kassettenhalter 7 vorhanden ist. Die Muffenhaube 9 weist einen Ringflansch 46 mit über den Flanschumfang verteilten Durchberechungen 47 und der Dichtkörper 4 weist einen Kragen 48 mit über den Kragenumfang verteilten Durchbrechungen 49 für eine Verschlußsicherung mittels Kabelbinder an beliebiger Umfangsstelle bei mit dem Ringflansch 46 auf den Kragen 48 aufgesetzter Muffenhaube 9 auf. Der Dichtkörper 4 und die Muffenhaube 9 bestehen aus PP, die Kabeldurchführungsadapter 5 aus EPDM, die Konsole 6 für den Kassettenhalter 7 aus Stahl und der Kassettenhalter 7 aus POM. - Um eine mechanische Abhebelung der Muffenhaube 9 von dem Dichtkörper 4 zu erreichen, weist der Dichtkörper 4 oberhalb seines Kragens 48 in vorgegebenen Abständen und gegebenenfalls versetzt angeordnete Einkerbungen 50 zum Ansetzen eines Hebelwerkzeuges, z. B. Schraubendrehers 51 auf.

Im Zuge der Handhabung des erfindungsgemäßen Muffengehäuses werden bei Differenzen zwischen dem Kabelmantelaußendurchmesser der einzuführenden Glasfaserkabel 3 und der aufgeprägten maximalen Durchmesservorgabe auf den Kabeldurchführungsadaptern 5 mittels Dichtbänder ausgeglichen, welche um das jeweilige Glasfaserkabel 3 gewickelt werden, bis der aufgeprägte Duchmesser auf dem betreffenden Kabeldurchführungsadapter 5 erreicht ist. Es werden dann die Kabeldurchführungsadapter 5 auf die umwickelten Stellen der Glasfaserkabel 3 aufgesetzt. Dazu sind die Kabeldurchführungen 19 geschlitzt. Die Kabeldurchführungsadapter 5 werden zusammengedrückt und mit einem selbstklebenden Kunststoffband gesichert sowie in den entsprechenden Aufnahmen 14 der Dichtkörperhälften 4a, 4b eingelegt. Die Dichtkörperhälften 4a, 4b werden mittels der festanzuziehenden Schrauben 13 miteinander verbunden, bis die Trennfuge zwischen den Dichtkörperhälften 4a, 4b geschlossen ist. - Zur Herstellung eines Potentialausgleiches erfolgt eine Kontaktierung der metallischen Elemente der Glasfaseraußenkabel mit einem Glasfaserkabelerdungssatz. In diesem Zusammenhang erfolgt ein Durchverbinden der freien Enden der Glasfaserkabelerdungssätze mit der Konsole 6 für den Kassettenhalter 7. - Das Abdichten der Glasfaserkabel 3 in dem Dichtkörper 4 erfolgt mittels einer Dichtungspaste bzw. Dichtungsmasse, welche über die Injektionsöffnung 16 in die Dichtkammer 12 injiziert wird. Die Injektions- und Entlüftungsöffnung wird anschließend mit einem Verschlußstopfen verschlossen. Danach wird der Dichtring 11 in die umlaufende Ringnut 10 des Dichtkörpers 4 eingelegt und die Muffenhaube 9 auf den Dichtkörper 4 bis zum Anschlag Ringflansch 46 gegen Kragen 48 aufgeschoben. Die Verbindung der Muffenhaube 9 mit dem Dichtkörper 4 wird mittels Kabelbinder hergestellt.

## Patentansprüche

1. Muffengehäuse zum Verbinden, Abzweigen und Aufteilen von Kabeln, insbesondere der Bündeladern und ihrer Glasfasern von Glasfaserkabeln, **gekennzeichnet durch** einen geteilten Dichtkörper (4) als Gehäuseboden mit einem oder mehreren Kabeldurchführungsadaptern (5), durch zumindest eine an dem Dichtkörper (4) zu befestigende Konsole (6) für zumindest einen an der Konsole zu befestigenden Kassettenhalter (7) für eine Mehrzahl von Kassetten (8) und durch eine auf den Dichtkörper (4) mit Dichtwirkung aufsetzbare Muffenhaube (9), welche mittels zumindest eines den Dichtkörper (4) in einer Ringnut (10) umlaufenden Dichtringes (11) gegen den Dichtkörper (4) abgedichtet ist und den Kassettenhalter (7), die Konsole (6) und zumindest teilweise den Dichtkörper (4) aufnimmt.

2. Muffengehäuse nach Anspruch 1, dadurch gekennzeichnet, daß der Dichtkörper als mittig geteilter Dichtkörper (4) für zwei nebeneinander angeordnete Kabeldurchführungsadapter (5) ausgebildet ist und eine eingeformte Dichtkammer (12) zur Aufnahme von Dichtmasse aufweist, und daß die beiden Dichtkörperhälften (4a, 4b) mittels Schrauben (13), z. B. unverlierbar gehaltener Schrauben miteinander verbindbar sind.

3. Muffengehäuse nach Anspruch 1 oder 2, dadurch gekennzeichnet, daß der Dichtkörper (4) Aufnahmen (14) für jeweils zwei nebeneinander und mit vorgegebenem Abstand hintereinander angeordnete Kabeldurchführungsadapter (5) aus biegeelastischem Material, z. B. Gummi oder gummiartigem Kunststoff aufweist und die Dichtkammer (12) sich zwischen den hintereinander angeordneten Kabeldurchführungsadaptern (5) befindet.

4. Muffengehäuse nach einem der Ansprüche 1 bis 3, dadurch gekennzeichnet, daß die Aufnahmen (14), z. B. kreisförmige Aufnahmen, gezahnte oder geriffelte Innenflächen (18) zur zug- und/oder schubfesten Verankerung der Kabeldurchführungsadapter (5) aufweisen.

5. Muffengehäuse nach einem der Ansprüche 1 bis 4, dadurch gekennzeichnet, daß der Dichtkörper (4) in seinen beiden äußeren sich gegenüberliegenden Teilungsbereichen zu den hintereinander angeordneten Kabeldurchführungsadaptern (5) führende Nut/Federverbindungen (15) aufweist, daß die Nut/Federverbindungen (15) im Bereich der Ringnut (10) unterbrochen sind, daß die Ringnut (10) an die Dichtkammer (12) angeschlossen ist und der Dichtring (11) mit Dichtmasse in Kontakt kommt.

6. Muffengehäuse nach einem der Ansprüche 1 bis 5, dadurch gekennzeichnet, daß die Dichtkammer (12) zumindest eine verschließbare Injektionsöffnung (16) und Entlüftungsöffnung aufweist.

7. Muffengehäuse nach einem der Ansprüche 1 bis 6, dadurch gekennzeichnet, daß der Dichtkörper (4) ein Be- und Entlüftungsventil (17) zum Be- und Entlüften der Muffenhaube (9) aufweist.

8. Muffengehäuse nach einem der Ansprüche 1 bis 7, dadurch gekennzeichnet, daß der Dichtring (11) als ungeteilter Profildichtring ausgebildet ist.

9. Muffengehäuse nach einem der Ansprüche 1 bis 8, dadurch gekennzeichnet, daß in die Kabeldurchführungsadapter (5) die Kabeldurchführungen (19) unter Bildung eines von einer dünnen Haut (20) gebildeten Kerns (21) eingeschnitten sind.

10. Muffengehäuse nach einem der Ansprüche 1 bis 9, dadurch gekennzeichnet, daß die Kabeldurchführungen (19) Kabeleinführungsschnitte (22) aufweisen.

11. Muffengehäuse nach einem der Ansprüche 1 bis 10, dadurch gekennzeichnet, daß die Konsole (6) als I-förmiges Flanschprofil ausgebildet ist, dessen einer I-Flansch (23) an die Innenseite einer Dichtkörperhälfte (4a) angeschraubt ist und an dessen anderen I-Flansch (24) der Kassettenhalter (7) angeschlossen ist.

12. Muffengehäuse nach einem der Ansprüche 1 bis 11, dadurch gekennzeichnet, daß der I-Steg (25) der Konsole (6) Gewindebohrungen (26) für Erdungsanschlüsse aufweist.

13. Muffengehäuse nach einem der Ansprüche 1 bis 12, dadurch gekennzeichnet, daß die Konsole (6) Aufnahmebohrungen (27) und Einhängeanformungen (28) zum Befestigen des Kassettenhalters (7) aufweist.

14. Muffengehäuse nach einem der Ansprüche 1 bis 13, dadurch gekennzeichnet, daß die Konsole (6) eine sich in Längsrichtung der Muffenhaube (9) erstreckende Trägerschiene (29) mit einem weiteren Flansch (30) zum Anschließen eines weiteren Kassettenhalters (7a) aufweist.

15. Muffengehäuse nach einem der Ansprüche 1 bis 14, dadurch gekennzeichnet, daß der Kassettenhalter (7) Aufnahmefächer (31) für die Kassetten (8) aufweist, wobei die Aufnahmefächer (31) durch in Abständen der Kassettendicken angeordnete Federlaschen (32) gebildet sind.

16. Muffengehäuse nach einem der Ansprüche 1 bis 15, dadurch gekennzeichnet, daß die Federlaschen (32) im Bereich der Kassettenmitte Nocken (33) aufweisen, welche in eine mittige Bohrung der Kassetten (8) einrasten.

17. Muffengehäuse nach einem der Ansprüche 1 bis 16, dadurch gekennzeichnet, daß der Kassettenhalter (7) ein topfartiges Haltergehäuse (34) mit bodenseitigen Spreizzapfen (35) zum Einrasten in die Aufnahmebohrungen (27) der Konsole (6) und/oder Gewindebuchsen (36) zur Aufnahme von durch die Aufnahmebohrungen (27) hindurchgeführten Befestigungsschrauben und/oder Einhängehaken (37) zum Hintergreifen der Einhängeanformungen (28) an der Konsole (6) aufweist.

18. Muffengehäuse nach einem der Ansprüche 1 bis 17, dadurch gekennzeichnet, daß an die Unterseite des Kassettenhalters (7) eine U-förmige Bündeladernablage (38) mit ihrer U-Basis anschließbar ist, daß die Bündeladernablage (38) nach innen abgewinkelte U-Schenkel (39) aufweist und die abgewinkelten U-Schenkel eine Einlegeöffnung (E) begrenzen.

19. Muffengehäuse nach einem der Ansprüche 1 bis 18, dadurch gekennzeichnet, daß der Kassettenhalter (7) auf seiner Unterseite angeformte Einschiebeköpfe (40) und Einschiebezungen (41) aufweist, und daß die U-Basis der Bündeladernablage (38) entsprechende Einschiebelanglöcher (42) mit von den Einschiebeköpfen (40) hintergriffenen Verengungen (43) und Einschiebeaufnahmen (44) für die Einschiebezungen (41) aufweist.

20. Muffengehäuse nach einem der Ansprüche 1 bis 19, dadurch gekennzeichnet, daß außenwandig an das Haltergehäuse (34) ein elastisches Sicherungsband (45) zum Überspannen der Kassetten (8) mittels einer Mehrfachlochung anschließbar ist.

21. Muffengehäuse nach einem der Ansprüche 1 bis 20, dadurch gekennzeichnet, daß die Muffenhaube (9) als langgestreckte Haube ausgebildet und die Haubenlänge so gewählt ist, daß die Bündeladern (1) mit vorgegebenen Radien geführt sind und hinreichender Bündelvorrat zum einzelnen Herausnehmen und wieder Zurückführen von Kassetten (8) aus dem Kassettenhalter (7) vorhanden ist.

22. Muffengehäuse nach einem der Ansprüche 1 bis 21, dadurch gekennzeichnet, daß die Muffenhaube (9) einen Ringflansch (46) mit über den Flanschumfang verteilten Durchbrechungen (47) und der Dichtkörper (4) einen Kragen (48) mit über den Kragenumfang verteilten Durchbrechungen (49) für eine Verschlußsicherung mittels Kabelbinder an beliebiger Umfangstelle bei mit dem Ringflansch (46) auf den Kragen (48) aufgesetzter Muffenhaube (9) aufweisen.

23. Muffengehäuse nach einem der Ansprüche 1 bis 22, dadurch gekennzeichnet, daß der Dichtkörper (4) oberhalb seines Kragens (48) in vorgegebenen Abständen und gegebenenfalls versetzt angeordnete Einkerbungen (50) zum Abhebeln der Muffenhaube (9) aufweist.

24. Muffengehäuse nach einem der Ansprüche 1 bis 23, dadurch gekennzeichnet, daß der Dichtkörper (4) und die Muffenhaube (9) aus PP (Polypropylen), die Kabeldurchführungsadapter (5) aus EPDM (Etylen-Propylen-Elastomere), die Konsole (6) für den Kassettenhalter aus Stahl und der Kassettenhalter (7) aus POM (Polyformaldehyd) bestehen.
